(19) Europäisches Patentamt
European Patent Office
Office européen des brevets

(11) **EP 2 501 909 B1**

(12) **FASCICULE DE BREVET EUROPEEN**

(45) Date de publication et mention
de la délivrance du brevet:
**30.03.2016 Bulletin 2016/13**

(21) Numéro de dépôt: **10785129.7**

(22) Date de dépôt: **18.10.2010**

(51) Int Cl.:
*F01N 9/00* *(2006.01)*    *F01N 11/00* *(2006.01)*
*F01N 3/20* *(2006.01)*    *F01N 3/10* *(2006.01)*
*F01N 3/021* *(2006.01)*

(86) Numéro de dépôt international:
**PCT/FR2010/052205**

(87) Numéro de publication internationale:
**WO 2011/061423 (26.05.2011 Gazette 2011/21)**

(54) **PROCEDE DE CONTROLE DES EMISSIONS POLLUANTES D'UN MOTEUR A COMBUSTION**

VERFAHREN ZUR KONTROLLE DER SCHADSTOFFEMISSIONEN AUS EINEM VERBRENNUNGSMOTOR

METHOD FOR CONTROLLING POLLUTANT EMISSIONS FROM A COMBUSTION ENGINE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **17.11.2009 FR 0958102**

(43) Date de publication de la demande:
**26.09.2012 Bulletin 2012/39**

(73) Titulaire: **Peugeot Citroën Automobiles SA
78140 Vélizy Villacoublay (FR)**

(72) Inventeurs:
• **CHARIAL, Christophe
F-78760 Jouars-Pontchartrain (FR)**
• **GRISE, Clément
F-92270 Bois Colombes (FR)**

(74) Mandataire: **Renous Chan, Véronique
Peugeot Citroen Automobiles SA
Propriété Industrielle - LG081
18 rue des Fauvelles
92250 La Garenne Colombes (FR)**

(56) Documents cités:
**EP-A2- 1 024 254    WO-A2-2009/135071
US-A1- 2009 158 710**

**Description**

La présente invention concerne un procédé de contrôle des émissions polluantes d'un moteur à combustion.

L'utilisation de combustible fossile comme le pétrole ou le charbon dans un système de combustion, en particulier le carburant dans un moteur, entraine la production en quantité non négligeable de polluants qui peuvent être déchargés par l'échappement dans l'environnement et y causer des dégâts. Parmi ces polluants, les oxydes d'azote (appelés NOx) posent un problème particulier puisque ces gaz sont soupçonnés d'être un des facteurs qui contribuent à la formation des pluies acides et à la déforestation. En outre, les NOx sont liés à des problèmes de santé pour les humains et sont un élément clé de la formation de « smog » (nuage de pollution) dans les villes. La législation impose des niveaux de rigueur croissante pour leur réduction et/ou leur élimination de sources fixes ou mobiles.

Parmi les polluants que les législations tendent à réglementer de façon de plus en plus stricte figurent également les suies ou autres matériaux particulaires résultant essentiellement d'une combustion incomplète du carburant, plus particulièrement lorsque le moteur est opéré en mélange dit pauvre, c'est-à-dire avec un excédent d'oxygène (d'air) par rapport à la stoechiométrie de la réaction de combustion. Les mélanges pauvres sont de règle pour les moteurs dits diesel, dont l'allumage est obtenu par compression.

Pour ces deux grandes catégories de polluants, différents moyens de dépollution et stratégies de combustion sont mis en oeuvre.

Pour limiter les émissions de particules, la technologie des filtres à particules se généralise peu à peu pour tous les véhicules équipés d'un moteur diesel. Cette technologie consiste essentiellement à forcer le passage des gaz d'échappement à travers des canaux poreux d une structure nid d abeille en céramique. Les suies ainsi filtrées s'accumulent puis sont éliminées dans une opération de régénération du filtre pendant laquelle elles sont brûlées. Pour obtenir cette régénération, il est toutefois nécessaire d'augmenter la température des gaz d'échappement, ce qui est typiquement obtenu en enrichissant ceux-ci avec du carburant (injecté directement dans la ligne d'échappement ou dans la chambre de combustion du moteur, pendant la phase d'échappement du cycle de combustion) et/ou en augmentant la charge du moteur. Par ailleurs, un agent catalytique est utilisé pour faciliter la combustion des suies, cet agent étant soit déposé de façon permanente dans les canaux du filtre, soit introduit comme additif avec le carburant, cette dernière technologie permettant d'opérer avec des températures de combustion plus basses que celles requises avec des filtres catalysés.

Pour limiter les émissions de NOx, la principale voie mise en oeuvre sur les véhicules actuels a été celle de la réduction des émissions à la source, autrement dit, en opérant le moteur dans des conditions telles que les taux de NOx produits soient inférieurs aux taux limites. Ces conditions sont réunies notamment en pilotant de manière très fine les différents paramètres du moteur, à commencer par les paramètres d'injection de carburant et de réinjection à l'admission d'une partie des gaz d'échappement, ceci afin de réduire la concentration en oxygène favorable à la formation des oxydes d'azote.

Toutefois, il n'est pas possible de réduire drastiquement les émissions à la source sans limiter certaines performances du moteur. C'est pourquoi il a été proposé différentes solutions pour dénitrifier les gaz d'échappement. Une solution ayant fait la preuve de son efficacité notamment pour les poids lourds est la conversion chimique par réduction des oxydes d'azote au moyen d'un agent réducteur directement injecté dans la ligne d'échappement. Ainsi, une solution de post-traitement ayant fait la preuve de son efficacité est l'utilisation d'une source d'ammoniac ($NH_3$), telle que l'urée aqueuse. L'ammoniac réagit avec les $NO_x$ sur un catalyseur pour former de l'azote $N_2$ inerte et de l'eau $H_2O$. Cette solution est essentiellement connue sous le nom de son acronyme anglais SCR pour « Selective Catalytic Réduction ».

Un réducteur communément utilisé est de l'ammoniac, stocké sous forme d'urée, l'ammoniac étant obtenu par thermolyse/ hydrolyse de l'urée dans la ligne d'échappement selon les réactions suivantes :

$$(NH_2)2CO \rightarrow HNCO + NH_3 : \text{thermolyse à 120°C} \qquad (1)$$

$$HNCO + H2O \rightarrow CO_2 + NH_3 : \text{hydrolyse à 180°C} \qquad (2)$$

Le catalyseur SCR sert ensuite à favoriser la réduction des NOx par $NH_3$ selon les 3 réactions suivantes:

$$4NH_3 + 4NO + O_2 \rightarrow 4N_2 + 6H_2O \qquad (3)$$

$$2NH_3 + NO + NO_2 \rightarrow 2N_2 + 3H_2O \qquad (4)$$

$$8NH_3 + 6NO_2 \rightarrow 7N_2 + 12H_2O \qquad (5)$$

L'ammoniac étant lui-même un gaz considéré comme toxique, il importe que la quantité d'urée injectée soit à tout moment adaptée à la quantité d'oxydes d'azote à traiter.

Un simple contrôle en boucle fermé essentiellement basé sur l'information fournie par un capteur de NOx disposé en aval du piège à NOx est exclu pour un moteur opérant de façon prédominante en régimes transitoires, comme un moteur d'un véhicule automobile.

La quantité de NOx peut toutefois être estimée notamment sur la base d'une cartographie des émissions d'oxydes d'azote en fonction notamment des conditions de fonctionnement du moteur, autrement dit, essentiellement en fonction de la demande de régime et de couple.

Toutefois, en pratique, ajuster précisément la quantité d'urée à injecter pose de nombreuses difficultés. En effet, l'ammoniac disponible pour la réaction est celui qui est « stocké » à un instant donné dans le catalyseur. Plus la température des gaz d'échappement augmente, moindre sera la capacité du catalyseur à stocker de l'ammoniac, une réaction de désorption concurrençant la réaction d'adsorption. En revanche, cette augmentation de la température tend à favoriser la cinétique de la réaction, et donc à favoriser les réactions de réduction. Dans ces conditions, une parfaite maitrise des émissions est difficile à obtenir.

Dans ces conditions, l'information donnée par le capteur NOx en aval du catalyseur peut être utilisée pour vérifier que le système fonctionne normalement, et déclencher une alerte si un dysfonctionnement apparait. Ainsi selon La réglementation en vigueur en Europe le seuil d'émission des $NO_x$ est mesuré sur tout un cycle de conduite normalisé, désigné par l'acronyme NEDC (« New European Driving Cycle »), si le seuil d'émission est atteint, il doit être signalé au conducteur par un témoin lumineux et enregistré dans la mémoire des défauts, car au-delà de ce seuil le système SCR est considéré comme défaillant.

Avant l'atteinte de ces seuils, des mesures peuvent être prises pour compenser une dérive du signal, par exemple pour tenir compte d'un vieillissement supposé du catalyseur, par exemple en substituant à la cartographie d'injection d'origine une nouvelle cartographie mieux adaptée à un système en fin de vie.

Mais une grande difficulté tient de ce que les seuils sont définis par rapport à des moyennes, avec ainsi des plafonds d'émissions en grammes par kilomètre parcouru, alors que les conditions de roulage d'un véhicule ne sont normalement pas stationnaires. Ainsi, même si le conducteur a actionné le régulateur de vitesse, la charge moteur peut varier de par la mise en route d'un compresseur de climatisation ou plus simplement, d'une variation de l'état de la route (pente et qualité du revêtement).

Il serait donc souhaitable de pouvoir disposer d'un moyen pour détecter en temps réel un fonctionnement anormal du système SCR, sans pour autant considérer qu'une dérive instantanée des émissions est nécessairement le signe d'un tel disfonctionnement.

Selon l'invention, il est ainsi proposé un procédé de contrôle d'un système de traitement des NOx présents dans une ligne d'échappement d'un moteur à combustion interne, ledit système comportant des moyens pour introduire dans la ligne d'échappement un agent réducteur en amont d'un catalyseur de réduction des NOx, caractérisé en ce que l'on estime l'efficacité du traitement par rapport à un potentiel de conversion maximale obtenu si le rapport entre la quantité de réducteur injectée et la quantité de NOx dans les gaz respecte une consigne donnée et si la masse d'agent réducteur stockée dans le catalyseur respecte une consigne de stockage donnée.

Selon l'invention, la masse de réducteur stockée dans le catalyseur est estimée sur la base d'une cartographie de base fonction de la température des gaz d'échappement et du ratio $NO_2/NO$.

Aussi selon l'invention, on estime la masse d'agent réducteur stockée dans le catalyseur en intégrant en fonction du temps la vitesse de stockage de l'ammoniac injecté dans la ligne et la vitesse de déstockage de l'ammoniac par réaction des NOx, en posant comme conditions aux limites que cette masse ne peut être inférieure à 0.

Cette vitesse de stockage peut être estimée comme uniquement dépendante de la quantité d'ammoniac injectée dans la ligne.

Pour la vitesse de déstockage, on peut l'estimer en en supposant que le ratio stoechiométrique $R_{NH3/NOx}$ de la réaction de conversion des NOx par l'ammoniac dépend du ratio $NO_2/NO$ de la façon suivante :

Si $R_{NO2/NO} < 0{,}50$ alors $R_{NH3/NOx} = 1$

Sinon $R_{NH3/NOx} = (1+8(R_{NO2/NO}-0{,}50))/(1+6*(R_{NO2/NO}-0{,}50))$.

Dans une variant du procédé selon l'invention, pour un type de catalyseur SCR donné, le potentiel de conversion maximale est estimé à partir d'une cartographie fonction de la température du catalyseur de réduction SCR et du ratio NO2/NO à l'entrée du catalyseur SCR.

Avantageusement, ce ratio NO2/NO est estimé à partir d'une cartographie en fonction de la température et du temps de séjour des gaz d'échappement dans un catalyseur d'oxydation en amont disposé dans la ligne d'échappement, en amont du catalyseur SCR.

La valeur estimée à partir de la cartographie fonction du temps de séjour des gaz d'échappement dans le catalyseur d'oxydation DOC peut elle-même être corrigée par un facteur dépendant de l'état de vieillissement du catalyseur DOC.

Ce facteur de vieillissement peut être défini comme le rapport entre la durée cumulée d'exposition au-delà d'une première température critique provoquant une dégradation du catalyseur d'oxydation sur une durée de référence d'exposition à la première température critique, pour laquelle la dégradation du catalyseur est complète.

Lorsque le catalyseur est exposé à une seconde température critique, supérieure à la première température critique, les temps d'exposition peuvent avantageusement être multipliés par un facteur correcteur supérieur à 1.

L'estimation du temps de séjour des gaz d'échappement dans le catalyseur d'oxydation DOC peut être faite à partir de la température et de la pression des gaz d'échappement en sortie du catalyseur d'oxydation et du débit des gaz d'échappement en amont du catalyseur d'oxydation.

D'autres détails et caractéristiques avantageuses de l'invention ressortent de la description détaillée faite ci-après en référence aux figures annexées qui montrent :

- Figure 1 : une vue schématique d'un moteur et de sa ligne de traitement des gaz d'échappement ;

- Figure 2 : un schéma de principe illustrant la dépendance entre le modèle d'estimation du rapport NO2/NO en sortie d'un catalyseur d'oxydation ;

- Figure 3 : un schéma illustrant le calcul du temps de séjour des gaz d'échappement dans le catalyseur d'oxydation ;

- Figure 4 : un schéma du principe du module d'estimation du ratio $NO_2/NO$ en sortie du catalyseur d'oxydation ;

- Figure 5 : un schéma du principe du module de calcul de l'efficacité du système SCR ;

- Figure 6 : l'allure de la variation de l'efficacité d'un catalyseur SCR en fonction de sa charge en ammoniac ;

- Figure 7 : un schéma du principe d'un module de calcul de la charge d'ammoniac dans le catalyseur.

Il est précisé que par oxydes d azote NOx on entend les deux composés azotés dont les émissions sont réglementées à savoir le monoxyde d'azote et le dioxyde d'azote, produits notamment par des moteurs fonctionnant en mélange pauvre, c'est-à-dire avec un excès d'oxygène par rapport à la stoechiométrie de la réaction de combustion du carburant, à l'exemple notamment des moteurs à allumage par compression dits diesels.

Dans la description qui suit, par souci de clarté, il sera systématiquement fait l'hypothèse que l'agent réducteur est injecté tel quel dans la ligne d'échappement, en amont du catalyseur SCR. Ceci est par l'exemple le cas si cet agent de l'hydrogène ou de l'ammoniac stocké sous forme gazeuse ou produit dans un générateur idoine avant d'être introduit de façon contrôlée dans la ligne d'échappement. Toutefois, cet injecteur peut également être introduit sous la forme d'un précurseur, à l'exemple bien connu de l'urée, qui après une réaction de thermolyse et d'hydrolyse, se transforme en ammoniac (voir les équilibres 1 et 2 proposés plus haut).

De plus, on suppose que cet agent réducteur est effectivement de l'ammoniac, et par souci de clarté, la désignation (NH3) est systématiquement dans la suite de la description, même si l'invention n'est pas limitée à ce mode de réalisation.

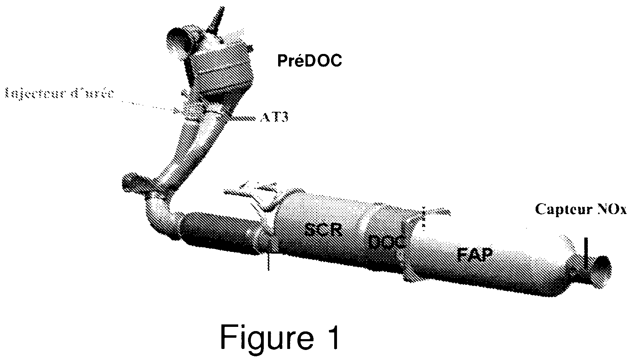

La figure 1 est une vue schématique d'un moteur et de sa ligne de traitement des gaz d'échappement. En entrée de ligne est disposé un catalyseur d'oxydation DOC dont le rôle premier est de convertir le monoxyde de carbone, et la fraction d'hydrocarbures gazeux non imbrûlée ou partiellement brûlée, en dioxyde de carbone, dans les chambres de combustion du moteur. Une telle disposition au plus près du moteur, donc dans la région la plus chaude de la ligne d'échappement garantit un maximum d'efficacité à ce catalyseur, mais n'entre pas dans le cadre spécifique de l'invention.

En continuant dans le sens des gaz d'échappement, on note la présence d'un capteur de température permettant d'estimer la température des gaz d'échappement en amont du système de traitement SCR.

Ce système de traitement est constitué essentiellement par un injecteur, relié à une source d'agent réducteur non représentée, et en aval de celle-ci, un catalyseur de réduction sélective, dit catalyseur SCR. De façon bien connue un tel catalyseur peut être constitué par une zéolithe déposée sur un support en céramique, par exemple du type cordiérite. Avec un tel catalyseur à base de zéolithe, la réaction de conversion des NO en $NO_2$ est très peu promue. Avec d'autres catalyseurs, contenant du platine ou du palladium, cette conversion sera par contre plus favorisée.

Si le réducteur n'est pas injecté directement sous sa forme finale, mais sous la forme d'un précurseur, à l'exemple d'une solution aqueuse d'urée, le système peut également comporter des moyens propres à faciliter le mélange du précurseur dans les gaz d'échappement tout en autorisant une architecture de ligne relativement compacte.

Sur cette ligne, on a également fait figurer un piège à particules, disposé dans le cas présent en aval du catalyseur de réduction sélective, mais pouvant également être disposé en amont de l'injecteur.

Enfin, un capteur NOx est prévu afin de s'assurer que les émissions du véhicule sont toujours inférieures à une norme d'émission en vigueur.

Par la suite de ce mémoire, nous allons noter avec le suffixe 0, les données en un point en amont du catalyseur d'oxydation DOC (mais en aval du point de piquage des gaz EGR), 1, un point en aval de ce catalyseur DOC et en amont du catalyseur SCR.

La réduction catalytique des NOx par de l'ammoniac dans un catalyseur SCR consiste essentiellement dans la série des réactions numérotées (3) à (5) mentionnées plus haut, les NOx réagissant essentiellement avec l'ammoniac stocké dans le catalyseur à un moment donné.

A tout instant, on peut calculer l'efficacité du système, c'est-à-dire le rapport entre d'une part la différence entre la quantité de NOx émise par le moteur et celle émise par en bout de ligne, et d'autre part la quantité de NOx émise par le moteur.

La quantité de NOx émise en bout de ligne est estimée à l'aide d'un capteur NOx monté en aval des dispositifs de traitement.

La quantité de NOx émise par le moteur peut être obtenue à partir d'une cartographie établie sur la base de mesures réelles des émissions en sortie de moteur, typiquement sur un banc moteur associé à une baie d'analyse chimique et quantificative des gaz d'échappement.

Lors de la phase de mise au point du moteur, on définit pour chaque point de fonctionnement du moteur (que l'on peut définir comme une demande de couple moteur à un régime moteur donné), un ensemble de paramètres moteurs optimisant la performance du véhicule et les émissions du véhicule. Parmi ces paramètres figurent par exemple la quantité de carburant injectée, la quantité d'air frais admise dans le moteur, les conditions d'injection du carburant, les instants d'ouverture des soupapes, le taux de recirculation des gaz d'échappement (EGR), etc. Ces paramètres sont transmis au contrôle moteur au moyen d'un jeu de cartographies qui se permettent de tenir compte de paramètres tels que la température extérieure, l'altitude (pour tenir compte de la raréfaction de l'oxygène), l'état de préchauffage du moteur, etc. Comme les émissions réglementées du véhicule sont prises en compte pour définir les paramètres moteurs, on va bien obtenir pour chaque point de fonctionnement du moteur, dans des conditions extérieures données, un débit massique instantané de NOx produit par ce moteur. Eventuellement, on peut également prévoir des cartographies pour des conditions de fonctionnement dégradées, par exemple dans l'hypothèse d'une absence de recirculation des gaz due à un disfonctionnement de la vanne EGR

Le système SCR a un fonctionnement nominal si cette efficacité constatée est conforme à un modèle théorique de ce système permettant de définir le potentiel de conversion maximal dans les conditions données.

Pour construire ce modèle, notons tout d'abord qu'un catalyseur présente une capacité de réduction qui est fonction de sa température et de la nature du gaz à traiter, autrement dit, du rapport $NO_2/NO$ noté par la suite $R_{NO_2/NO}$.

Tant que la température minimale d'activation (dite température de Light-off) n'est pas atteinte, le catalyseur est essentiellement inerte. Au-delà son efficacité croit jusqu'à ce que l'on atteigne une zone de fonctionnement optimal. Cette efficacité n'est pas universelle mais dépend bien sûr de la nature des espèces chimiques à traiter, donc dans le cas particulier du traitement des gaz d'échappement, du rapport $R_{NO_2\,NO}$.

## A - Détermination du ratio $NO_2/NO$ en entrée du catalyseur

Dans une première variante de l'invention, ce rapport $R_{NO_2/\,NO_2}$ peut être estimé à partir de cartographies établies lors de la mise au point du moteur, en analysant les gaz produits selon les différents points de fonctionnement du moteur.

En pratique, cette analyse est relativement compliquée, et le plus souvent, on s'attache simplement à déterminer les différentes espèces, la fraction NOx, somme des NO2 et des NO étant considérée comme un tout (comme cela est par ailleurs le cas avec les normes réglementaires en vigueur, et l'analyse des gaz est plus simplement effectuée après oxydation complète du gaz, donc conversion de toute la fraction NO en $NO_2$. C'est pourquoi un des objets de la présente invention est de proposer un moyen pour estimer ce rapport plus simplement.

Entre la sortie du moteur et le catalyseur de réduction catalytique, une oxydation d'une partie des NO va s'opérer dans le catalyseur d'oxydation DOC. C'est pourquoi un des objets de la présente invention est de proposer un modèle pour estimer ce rapport $R_{NO_2/NO}$, ce modèle étant remarquable en ce que le rapport est estimé en fonction du temps de séjour des gaz dans le catalyseur d'oxydation, et pondéré selon un facteur de vieillissement du catalyseur d'oxydation.

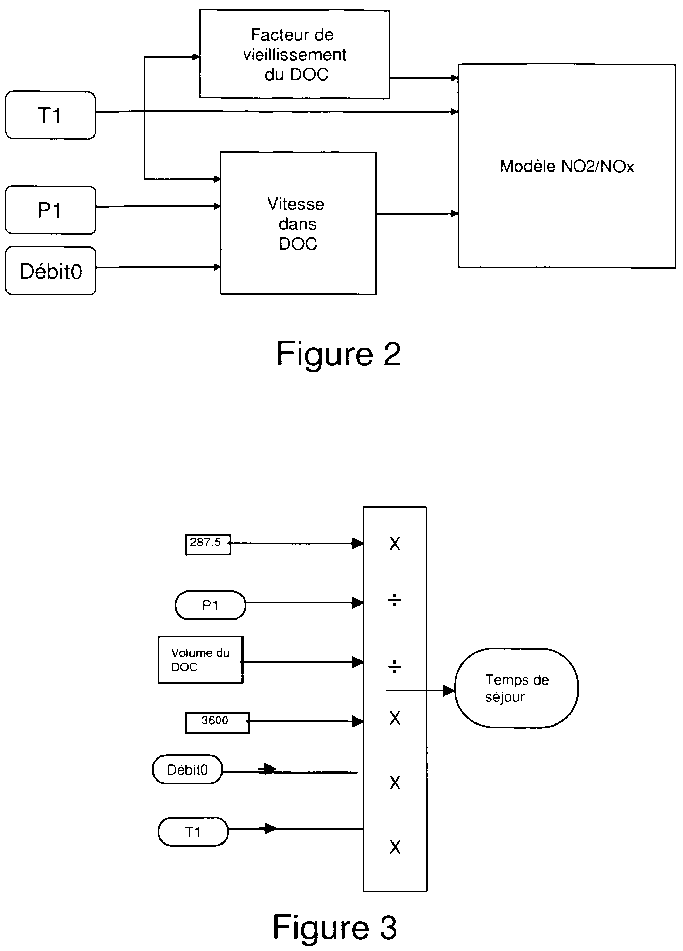

Ce modèle correspond pour l'essentiel au schéma proposé à la figure 2 où on montre que 3 données d'entrée : la température et la pression estimée en sortie du catalyseur DOC et le débit des gaz d'échappement en amont de ce catalyseur DOC sont nécessaires pour estimer le rapport $R_{NO_2/NO}$ à l'aide de 3 modules spécifiques qui permettent plus précisément de déterminer le facteur de vieillissement du catalyseur d'oxydation, la vitesse des gaz d'échappement dans le catalyseur DOC et un module d'estimation du rapport $R_{NO_2/NO}$ à partir du résultat de ces deux modules précédents.

## Module facteur de vieillissement du catalyseur d'oxydation

Selon l'invention, ce vieillissement peut être estimé à partir d'un compteur de temps qui totalise le temps passé au dessus d'une température critique au-delà de laquelle les performances du catalyseur DOC se dégradent irrémédiablement. Avantageusement, lorsque la température à laquelle le catalyseur DOC est exposée est particulièrement élevée (supérieure à une seconde température de seuil, supérieure à la température critique), le temps passé au-delà de cette seconde température de seuil est multiplié par exemple par 1,5.

On peut alors définir un facteur de temps normalisé comme le rapport entre ce compteur de temps et un compteur de temps de référence, correspondant à la durée cumulée d'exposition au-delà de la température critique entrainant une dégradation complète du catalyseur DOC. Ainsi, si le compteur de temps atteint ou dépasse cette durée de référence, le facteur de vieillissement sera fixé égal à 1. Un catalyseur DOC neuf, jamais exposé à une température au-delà de la température de référence aura pour sa part un facteur de vieillissement égal à 0.

## Temps de séjour des gaz dans le catalyseur d'oxydation

Ce module est illustré à la figure 3 et est essentiellement basé sur la loi des gaz parfaits, avec trois données d'entrée, la température T1 (exprimée en °Kelvin), et la pression en aval P1 du catalyseur d'oxydation (exprimée en Pascals) et le débit des gaz d'échappement en amont du catalyseur (exprimé en g/s), c'est-à-dire le débit de gaz produits par le moteur, moins celui des gaz admis dans le circuit EGR si le moteur est bien équipé d'un tel circuit et si le point de piquage du circuit EGR est disposé en amont du catalyseur d'oxydation, autrement dit si le moteur est équipé d'un circuit EGR haute pression.

Le calcul nécessite de plus la connaissance du volume V du catalyseur (volume accessible aux gaz, exprimé en litres). Dans un gaz parfait, la relation entre le nombre n de moles de gaz dans un volume V à la pression P et la température T est égal à RT/PV, R étant la constante des gaz parfaits. Dans le cas des gaz d'échappement, on peut approximer la masse molaire à 29, en considérant que ceux-ci sont essentiellement constitués des produits de la combustion par l'oxygène de l'air du carburant (qui peut être modélisé par la réaction $C_7H_{16} + 15O_2 \rightarrow 7CO_2 + 8H_2O$) et que l'azote de l'air se retrouve dans les gaz d'échappement. On en déduit la masse des gaz dans le catalyseur DOC.

En divisant la masse de gaz séjournant dans le catalyseur DOC par le débit massique en amont, on obtient une estimation du temps de séjour dans ce catalyseur DOC, temps de séjour qui par hypothèse est supposé identique pour toutes les espèces gazeuses présentes dans les gaz d'échappement dont notamment les NOx.

## Estimation du rapport $R_{NO_2/NO}$ en sortie du catalyseur d'oxydation.

Lors de ce séjour dans le catalyseur d'oxydation DOC, une partie des NOx va s'oxyder en $NO_2$. Les rédactions de réduction qui se produisent dans le catalyseur de réduction catalytique se font bien avec ce gaz enrichi en NO2. Il convient donc d'estimer le ratio NO2/NO (R NO2/NO) en sortie du catalyseur d'oxydation DOC.

Ce ratio dépend d'une part de la nature et de la dimension du catalyseur d'oxydation DOC, de l'état de vieillissement du catalyseur DOC et du temps de séjour des gaz dans le catalyseur d'oxydation. Nous avons montré précédemment comment on pouvait estimer un facteur de vieillissement et le temps de séjour.

Les auteurs de la présente invention ont trouvé que ce ratio $NO_2/NO$ en sortie du catalyseur d'oxydation peut être considéré comme indépendant du ratio $NO_2/NO$ à l'entrée de ce catalyseur, et dépendant seulement de la capacité d'oxydation du catalyseur d'oxydation d'une part et du temps de séjour des gaz dans le catalyseur d'autre part. Pour un choix d'architecture donné, et un état de vieillissement donné, le seul paramètre variable en fonction des conditions d'opération du moteur et affectant cette capacité d'oxydation est la température dans le catalyseur.

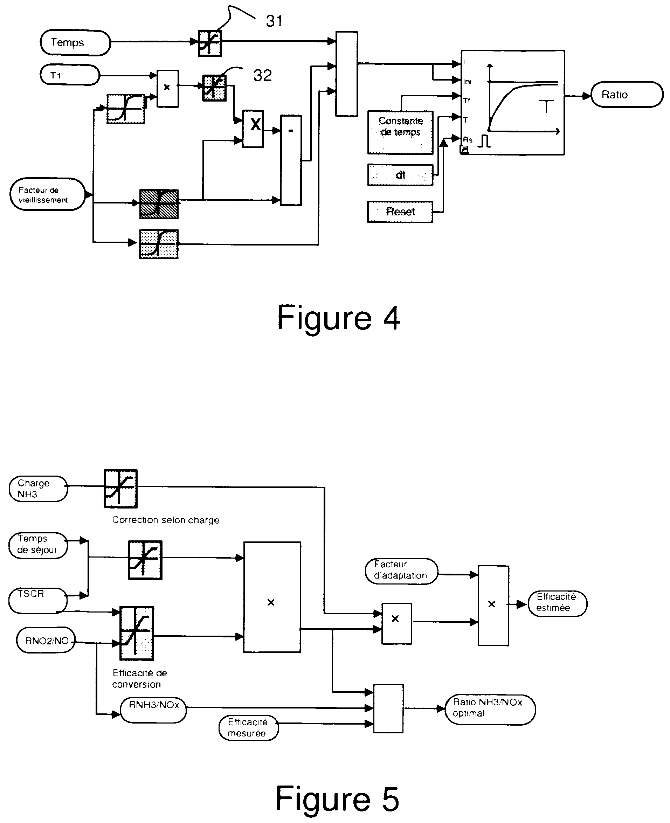

La figure 4 illustre le module d'estimation du ratio $NO_2/NO$ en sortie du catalyseur d'oxydation.

Une première cartographie 31 est utilisée pour sélectionner une valeur de ratio $NO_2/NO$ selon le temps de séjour des gaz 32 dans le catalyseur DOC. Cette valeur est corrigée par un premier facteur correcteur, fourni par une deuxième cartographie 33 en fonction de la température en aval du DOC, ce premier facteur étant par exemple choisi entre 0 et 1.

Le vieillissement du catalyseur DOC affecte ses performances au moins sur deux plans : d'une part sa température d'amorçage augmente, et d'autre part, au-delà de cette température d'amorçage, la capacité d oxydation est dégradée. On pourra donc utiliser deux cartographies spécifiques pour tester si le catalyseur DOC opère bien dans une plage de température adaptée, et pour affecter un second facteur correcteur, à nouveau choisi entre 0 et 1, pour tenir compte de cette dégradation de la capacité d'oxydation. Avantageusement, ce second facteur correcteur peut être différent à basse et haute température, pour tenir compte de ce que pour les faibles températures (juste au dessus de la température d'amorçage), la dégradation est plus forte que pour les températures plus élevées, de sorte que le vieillissement d'un catalyseur est d'autant plus pénalisant que la température est basse.

Enfin le ratio est filtré par un filtre passe-bas d'ordre 1 pour lisser la dynamique forte du temps de séjour, liée aux fortes variations du débit dans la ligne d'échappement.

Le ratio de $NO_2/NO$ étant estimé, il est possible de commencer à modéliser la réduction dans le catalyseur SCR, ce ratio étant supposé ne pas varier entre la sortie du catalyseur d'oxydation DOC et l'entrée du catalyseur de réduction SCR.

**B - Détermination de la masse de NH3 stockée dans le catalyseur**

Une mole d'ammoniac injectée en amont du catalyseur peut éventuellement être « piégée » par le catalyseur SCR, transformée en réagissant avec les NOx ou encore traverser le catalyseur SCR sans être transformée et se retrouver alors en aval du catalyseur $NH_3$.

Le catalyseur de réduction a une très grande affinité pour l'ammoniac et en deçà d'un certain seuil minimum de chargement en $NH_3$, la réaction de réduction des NOx par l'ammoniac n'est pas catalysée de façon significative. Par ailleurs, au-delà d'un seuil maximum de chargement en $NH_3$, la capacité de stockage est dépassée et de l'ammoniac est relâché par le catalyseur, et il faut ajouter cet ammoniac relâché par le catalyseur à celui provenant de l'injection de réducteur pour éviter un excès d'ammoniac qui se retrouverait alors en bout de ligne d'échappement, ajoutant aux polluants émis par le véhicule que l'on cherche par ailleurs à minimiser.

Ces seuils minimum et maximum dépendent de la température du catalyseur et sont d'autant plus bas que cette température augmente.

A toute température de catalyseur SCR correspond donc une consigne optimale de stockage, comprise entre le seuil minimum et le seuil maximum, que l'on peut éventuellement estimer comme égale à la médiane entre les seuils minimum et maximum si on souhaite minimiser le nombre total de cartographies embarquées. A tout instant, la quantité de réducteur qui est injectée est ajustée de façon à stabiliser la quantité d'ammoniac stockée à ce niveau de consigne optimale.

A noter que l'ammoniac stocké dans le catalyseur ne se volatilise pas suite à l'arrêt du véhicule, de sorte que la masse modélisée peut avantageusement être mémorisée à la fin de chaque phase de roulage pour l'utiliser comme masse initiale lors du roulage suivant. Dans ce but, on peut utiliser par exemple une mémoire non volatile, à l'exemple d'une mémoire morte effaçable électriquement et programmable de type EEPROM (acronyme pour « Electrically Erasable Programmable Read-Only Memory »).

La masse de $NH_3$ dans le catalyseur dépend de la quantité d'ammoniac injectée, et de la quantité de NOx traitée par le catalyseur, c'est-à-dire la différence entre les débits de NOx en amont et en aval du catalyseur. En d'autres termes, la masse de $NH_3$ dans le catalyseur est obtenue en intégrant la vitesse de stockage ou de déstockage (par réaction des NOx), en posant comme condition aux limites que cette masse est au minimum égale à 0 g. Cette vitesse de stockage dépend principalement de la quantité d'ammoniac injectée dans la ligne. Supposons que l'ammoniac soit injecté sous la forme d'une solution aqueuse avec 32,5% (en masse) d'urée. Pour chaque gramme de solution, on peut aisément calculer que l'on charge le catalyseur avec 0,184g de catalyseur.

La masse de NH3 dans le catalyseur est décrémentée par la masse des NOx qui réagissent dans celui-ci. Cette masse de NOx réagissant est fonction du rapport stoechiométrique. Pour avoir la masse de NH3, il suffit d'intégrer la vitesse de stockage ou de déstockage de celui-ci (La masse minimale est de 0g).

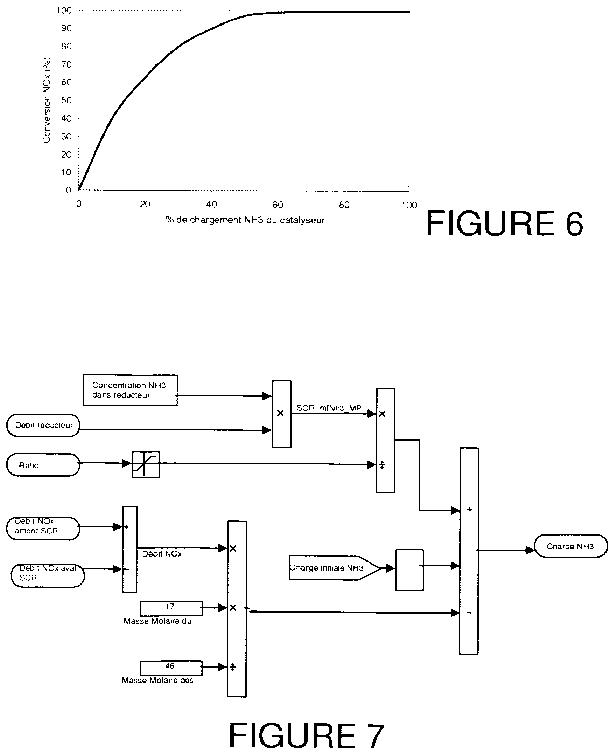

La figure 7 illustre de façon plus précise comment on peut implémenter ce modèle dans une unité de contrôle.

La masse NH3 modélisée dans le catalyseur peut également être réinitialisée pendant un roulage à une nouvelle valeur par la stratégie d'adaptation ou par une calibration.

En dehors de cette quantité d'ammoniac stockée dans le catalyseur, on retrouve bien sûr à un moment donné une certaine quantité d'ammoniac disponible pour la réaction de réduction des NOx. Si le ratio $R_{NO2\,NO}$ est inférieur à 0,5, il est estimé selon l'invention qu'une mole d'oxydes d'azote (NO ou $NO_2$) réagit avec une mole d'ammoniac. Si ce ratio est supérieur à 0,5, plus d'une mole d'oxydes d'azote réagit avec une mole d'ammoniac, et un rapport stoechiométrique noté $R_{NH3/NOx}$ peut être défini comme suit :

$$\text{Si } R_{NO2/NO} < 0,50 \text{ alors } R_{NH3/NOx} = 1$$

$$\text{Sinon } R_{NH3/NO} = (1+8(R_{NO2/NO} -0,50))/(1+6*(R_{NO2/NO} -0,50))$$

**C - Potentiel de conversion du catalyseur SCR**

Par ailleurs, la capacité de réduction du catalyseur ne peut s'exprimer que si le catalyseur SCR est effectivement à une température supérieure à sa température d'amorçage (par exemple de l'ordre de pour un catalyseur de type zéolithe...), condition qui n'est pas satisfaite dans les premiers instants suivants un démarrage du moteur.

Enfin, cette capacité dépend de la température du catalyseur SCR et du ratio $NO_2/NO$ en entrée du catalyseur.

A partir d'une estimation de ce ratio $NO_2/NO$ et de la température du catalyseur, on peut donc définir un potentiel de conversion maximale, dans l'hypothèse où la consigne d'injection a bien permis de respecter la consigne de stockage d'ammoniac d'une part, et le ratio $R_{NH3/NOx}$.

Ce potentiel de conversion maximale reflète les conditions réelles instantanées, donc un écart entre celui-ci et l'efficacité observée traduit un dysfonctionnement du système, dysfonctionnement qui peut être pris en compte pratiquement en temps réel car il correspond bien aux conditions instantanées qui peuvent ne pas être momentanément favorables à une bonne conversion.

La figure 5 illustre une utilisation possible de ce modèle. Les données d'entrée sont ici au nombre de 4 : la charge initiale en ammoniac 41, le temps de séjour 42 des gaz d'échappement dans le catalyseur SCR, la température du catalyseur SCR 43 et le ratio $R_{NO2\ NO}$.

La température du catalyseur n'est pas homogène, ni longitudinalement ni transversalement. Par ailleurs, le catalyseur SCR présente une certaine inertie thermique et sa température ne peut pas être confondue avec la température des gaz d'échappement. Pour autant, dans ce module, il importe simplement que cette température soit estimée en un point donné du catalyseur.

La figure 6 montre l'allure de la variation de l'efficacité d'un catalyseur SCR en fonction de sa charge en ammoniac. La charge 41 peut donc être convertie au moyen d'une cartographie ou d'une fonction de transfert 45 en un potentiel de conversion estimé.

Cette valeur va être corrigée par une première fois pour tenir compte du temps de séjour des gaz dans le catalyseur et de la température de celui-ci, pour refléter le fait que la cinétique de la réaction de réduction est d'autant plus grande que le catalyseur est chaud et que la réaction nécessite un certain laps de temps, de sorte que si le temps de séjour est écourté (débit de gaz d'échappement plus élevé en raison d'une augmentation du régime du moteur), alors l'efficacité sera moindre à isotempérature. Cette correction est effectuée sur la base d'un facteur compris entre 0 et 1 obtenu en 46.

Par ailleurs, comme indiqué précédemment, l'efficacité de la conversion des NOx dépend également du ratio NO2/NO, un autre facteur multiplicatif compris entre 0 et 1 est donc déterminé en 47, également à partir d'une cartographie appropriée.

La combinaison en 48 des facteurs 46, 47 permet de moduler le potentiel de conversion 45.

Eventuellement, comme illustré à la figure 4, on a également tenir du facteur d'adaptation 49 qui reflète le fait qu'il est parfois avantageux de choisir d'injecter une quantité d'ammoniac un peu inférieure à la quantité qui devrait permettre d'obtenir les meilleurs résultats, afin de s'assurer un intervalle de temps minimum entre deux remplissage du réservoir de réducteur.

Le module permet ainsi d'estimer le potentiel de conversion du catalyseur et de le comparer avec l'efficacité nominale constatée, et de prendre une décision - comme par exemple l'immobilisation du véhicule ou le passage du moteur en mode dégradé - s'il est jugé que le système ne fonctionne pas de façon nominale et nécessite une maintenance pour limiter les risques de pollution.

Ce module peut aussi être utilisé pour corriger la consigne de chargement en ammoniac comme proposé dans la demande de brevet FR2931201, selon laquelle, lorsqu'une anomalie du système SCR est détectée, en l'occurrence une efficacité mesurée non conforme aux attentes selon le modèle, on modifie la quantité d'agent réducteur à injecter, et si la mise en oeuvre de ce procédé conduit à un nombre de modifications successives de même nature supérieur à une valeur N prédéterminée, on corrige le modèle mathématique, et on remplace le modèle mathématique initial par le modèle corrigé.

## Revendications

**1.** Procédé de contrôle d'un système de traitement des NOx présents dans une ligne d'échappement d'un moteur à combustion interne, ledit système comportant des moyens pour introduire dans la ligne d'échappement un agent réducteur en amont d'un catalyseur de réduction des NOx, **caractérisé en ce que** l'on estime l'efficacité du traitement par rapport à un potentiel de conversion des NOx maximale obtenu si le rapport entre la quantité de réducteur injectée et la quantité de NOx dans les gaz respecte une consigne donnée et si la masse d'agent réducteur stockée dans le catalyseur respecte une consigne de stockage donnée, ladite masse étant estimée

- sur la base d'une cartographie de base fonction de la température des gaz d'échappement et du ratio $NO_2/NO$ des NOx ou
- en intégrant en fonction du temps la vitesse de stockage de l'ammoniac injecté dans la ligne et la vitesse de déstockage de l'ammoniac par réaction des NOx, en posant comme conditions aux limites que cette masse ne peut être inférieure à 0, la vitesse de déstockage étant estimée en supposant que le ratio stoechiométrique $R_{NH3/NOx}$ de la réaction de conversion des NOx par l'ammoniac dépend du ratio $NO_2/NO$ des NOx de la façon suivante :

$$\text{Si } R_{NO2/NO} < 0{,}50 \text{ alors } R_{NH3/NOx} = 1$$

$$\text{Sinon } R_{NH3/NOx} = (1+8(R_{NO2/NO} -0{,}50))/(1+6^*( R_{NO2/NO} -0{,}50)).$$

**2.** Procédé selon la revendication 1, **caractérisé en ce que** la vitesse de stockage est estimée uniquement dépendante de la quantité d'ammoniac injectée dans la ligne.

**3.** Procédé selon l'une des revendications précédentes, **caractérisé en ce que** pour un type de catalyseur SCR donné, le potentiel de conversion maximale est estimé à partir d'une cartographie fonction de la température du catalyseur de réduction SCR et du ratio $NO_2/NO$ des NOx à l'entrée du catalyseur SCR.

**4.** Procédé selon l'une des revendications précédentes, **caractérisé en ce que** le ratio $NO_2/NO$ des NOx est estimé à partir d'une cartographie en fonction de la température et du temps de séjour des gaz d'échappement dans un catalyseur d'oxydation en amont disposé dans la ligne d'échappement, en amont du catalyseur SCR.

**5.** Procédé selon la revendication 4, **caractérisé en ce que** la valeur estimée à partir de la cartographie fonction du temps de séjour des gaz d'échappement dans le catalyseur d'oxydation DOC est corrigée par un facteur dépendant de l'état de vieillissement du catalyseur DOC.

**6.** Procédé selon la revendication 5, **caractérisé en ce que** le facteur de vieillissement est défini comme le rapport entre la durée cumulée d'exposition au-delà d'une première température critique provoquant une dégradation du catalyseur d'oxydation sur une durée de référence d'exposition à la première température critique, pour laquelle la dégradation du catalyseur est complète.

**7.** Procédé selon la revendication 6, **caractérisé en ce que** lorsque le catalyseur est exposé à une seconde température critique, supérieure à la première température critique, les temps d'exposition sont multipliés par un facteur correcteur supérieur à 1.

**8.** Procédé selon l'une des revendications 4 à 7, **caractérisé en ce que** le temps de séjour des gaz d'échappement dans le catalyseur d'oxydation DOC est estimé à partir de la température et de la pression des gaz d'échappement en sortie du catalyseur d'oxydation et du débit des gaz d'échappement en amont du catalyseur d'oxydation.

**Patentansprüche**

**1.** Verfahren zur Steuerung eines Behandlungssystems der in einer Abgasleitung eines Verbrennungsmotors vorhandenen NOx, wobei das System Mittel aufweist, um ein Reduziermittel vor einem NOx reduzierenden Katalysator in die Abgasleitung einzuführen, **dadurch gekennzeichnet, dass** die Effizienz der Behandlung im Verhältnis zu einem maximal erhaltenen NOx-Konversionspotential bestimmt wird, wenn das Verhältnis zwischen der eingespeisten Reduziermittelmenge und der NOx-Menge in den Gasen innerhalb eines bestimmten Referenzwerts liegt und wenn die Masse des in dem Katalysator gespeicherten Reduziermittels innerhalb eines bestimmten Speichergrenzwerts liegt, wobei die Masse bestimmt wird

- auf der Basis einer Basiskartographie, die von der Temperatur der Abgase und dem Verhältnis $NO_2/NO$ der NOx abhängt, oder
- durch Integration, in Abhängigkeit von der Zeit, der Speichergeschwindigkeit des in die Leitung eingespeisten Ammoniaks und der Abgabegeschwindigkeit des Ammoniaks durch Reaktion der NOx, bei Grenzwertbedingungen, dass diese Masse nicht kleiner als 0 sein darf, wobei die Abgabegeschwindigkeit unter der Voraussetzung bestimmt wird, dass das stoechiometrische Verhältnis $R_{NH3/NOx}$ der Konversionsreaktion der NOx durch das Ammoniak vom Verhältnis $NO_2/NO$ der NOx folgendermaßen abhängt:

$$\text{wenn } R_{NO2/NO} < 0{,}50, \text{ dann } R_{NH3/NOX} = 1,$$

$$\text{anderenfalls } R_{NHS/NOX} = (1 + 8(R_{NO2/NO} -0,50))/(1 + 6^*$$

$$(R_{NO2/NO} -0,50)).$$

**2.** Verfahren nach Anspruch 1, **dadurch gekennzeichnet, dass** die Speichergeschwindigkeit nur in Abhängigkeit von der in die Leitung eingespeisten Ammoniakmenge bestimmt wird.

**3.** Verfahren nach einem der vorangehenden Ansprüche, **dadurch gekennzeichnet, dass** das maximale Konversionspotential für einen bestimmten Typ eines SCR-Katalysators auf der Basis einer Kartographie bestimmt wird, die von der Temperatur des SCR-Reduktionskatalysators und von dem Verhältnis $NO_2/NO$ der NOx am Eingang des SCR-Katalysators abhängt.

**4.** Verfahren nach einem der vorangehenden Ansprüche, **dadurch gekennzeichnet, dass** das Verhältnis $NO_2/NO$ der NOx auf der Basis einer Kartographie bestimmt wird, die von der Temperatur und von der Verweilzeit der Abgase in einem vorgelagerten Oxidationskatalysator abhängt, der in der Abgasleitung vor dem SCR-Katalysator angeordnet ist.

**5.** Verfahren nach Anspruch 4, **dadurch gekennzeichnet, dass** der Wert, der auf der Basis der Kartographie, die von der Verweilzeit der Abgase in dem DOC-Oxidationskatalysator abhängt, bestimmt wird, mit einem Faktor korrigiert wird, der vom Alterungszustand des DOC-Katalysators abhängt.

**6.** Verfahren nach Anspruch 5, **dadurch gekennzeichnet, dass** der Alterungsfaktor als das Verhältnis zwischen der kumulierten Expositionsdauer jenseits einer ersten kritischen Temperatur, die eine Abnutzung des Oxidationskatalysators hervorruft, und einer Referenz-Expositionsdauer der ersten kritischen Temperatur, für welche die Abnutzung des Katalysators vollständig ist, definiert ist.

**7.** Verfahren nach Anspruch 6, **dadurch gekennzeichnet, dass**, wenn der Katalysator einer zweiten kritischen Temperatur ausgesetzt wird, die höher als die erste kritische Temperatur ist, die Expositionszeiten mit einem Korrekturfaktor über 1 multipliziert werden.

**8.** Verfahren nach einem der Ansprüche 4 bis 7, **dadurch gekennzeichnet, dass** die Verweilzeit der Abgase in dem DOC-Oxidationskatalysator auf der Basis der Temperatur und des Drucks der Abgase am Ausgang des Oxidationskatalysators und des Durchsatzes der Abgase vor dem Oxidationskatalysator bestimmt wird.

**Claims**

**1.** Method for controlling a system for treating NOx present in an exhaust line of an internal combustion engine, said system including means for introducing into the exhaust line a reducing agent upstream from a catalyst for reducing NOx, **characterized in that** the efficiency of the treatment relatively to an obtained potential of maximum conversion of NOx is estimated if the ratio between the injected amount of reducing agent and the amount of NOx in the gases observes a given set value and if the mass of reducing agent stored in the catalyst observes a given storage set value, and said mass being estimated

- on the basis of a basic mapping depending on the temperature of the exhaust gases and on the $NO_2/NO$ ratio of the NOx or
- by integrating over time the storage rate of the ammonia injected into the line and the ammonia release rate by reaction of the NOx, by posing as boundary conditions that this mass cannot be less than 0, the release rate being estimated by assuming that the stoichiometric ratio $R_{NH3/NOx}$ of the NOx conversion reaction by ammonia depends on the $NO_2/NO$ ratio of the NOx in the following way:

$$\text{if } R_{NO2/NO} < 0.5 \text{ then } R_{NH3/NOx} = 1,$$

$$\text{else } R_{NH3/NOx} = (1+8(R_{NO2/NO}-0.50))/(1+6^*(R_{NO2/NO}-0.50)).$$

2. Method according to claim 1, **characterized in that** the storage rates is estimated as exclusively depending on the injected amount of ammonia into the line.

3. Method according to one of the preceding claims, **characterized in that** for a given type of SCR catalyst, the maximum conversion potential is estimated from a mapping depending on the temperature of the SCR reduction catalyst and on the $NO_2$/NO ratio of the NOx at the end that of the SCR catalyst.

4. Method according to one of the preceding claims, **characterized in that** the $NO_2$/NO ratio of the NOx is estimated from a mapping depending on the temperature and on the dwelling time of the exhaust gases in an oxidation catalyst positioned upstream in the exhaust line, upstream from the SCR catalyst.

5. Method according to claim 4, characterizing that the estimated value from the mapping, depending on the different time of the exhaust gases in the oxidation catalyst DOC is corrected by a factor depending on the aging condition of the DOC catalyst.

6. Method according to claim 5, **characterized in that** the aging factor is defined as the ratio between the accumulated exposure time to beyond a first critical temperature causing degradation of the oxidation catalyst over a reference exposure time to the first critical temperature, for which degradation of the catalyst is complete.

7. Method according to claim 6, **characterized in that** when the catalyst is exposed to a second critical temperature greater than the first critical temperature, the exposure times are multiplied by a correction factor greater than 1.

8. Method according to one of claims 4 to 7, **characterized in that** the dwelling time of the exhaust gases in the oxidation catalyst DOC is estimated from the temperature from the pressure of the exhaust gases at the outlet of the oxidation catalyst and from the flow rate of the exhaust gases upstream from the oxidation catalyst.

Figure 1

## Figure 2

Facteur de vieillissement du DOC

T1

P1

Débit0

Vitesse dans DOC

Modèle NO2/NOx

**Figure 2**

287.5   X

P1   ÷

Volume du DOC   ÷

3600   X

Débit0   X

T1   X

Temps de séjour

**Figure 3**

Figure 4

Figure 5

FIGURE 6

FIGURE 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2931201